# DEMANDE DE BREVET EUROPEEN

(11) **EP 1 844 991 A1**
(43) Date de publication de la demande: **17.10.2007**
(21) Numéro de dépôt: 07300923.5
(22) Date de dépôt: 04.04.2007
(51) Int. Cl.: B60R 21/203, F16J 15/48

(54) **Ensemble de direction à "air bag" pour véhicule automobile**

(30) Priorité: 11.04.2006 FR 0651307
(71) Demandeur: PEUGEOT CITROËN AUTOMOBILES S.A., 78140 Velizy Villacoublay (FR)
(72) Inventeur: Bailleux, François, 91400 Saclay (FR)

(57) **Abrégé**

Ensemble de direction à « air bag », pour véhicule automobile, comportant une colonne de direction (2) entraînée par un volant de manoeuvre (3) mobile en rotation autour de l'axe de cette colonne et un dispositif de sécurité (8) comprenant une cartouche pyrotechnique (9) montée fixe extérieurement au volant, propre à délivrer un volume de gaz apte à gonfler un sac souple (10) logé dans un moyeu (5) associé à ce volant, caractérisé en ce qu'il comporte, entre la cartouche (9) et le moyeu (5), un organe d'étanchéité (16) agencé pour se déformer sous l'effet de la pression du gaz émis par la cartouche (9) lors de la mise en oeuvre du dispositif de sécurité (8) pour obturer le jeu laissé libre entre cette cartouche et ce moyeu préalablement à cette mise en oeuvre, afin de permettre la rotation du volant et de la colonne.

## Description

La présente invention est relative à un ensemble de direction pour véhicule automobile, comportant une colonne d'entraînement pour l'orientation des roues, commandée par un volant actionné par l'utilisateur et monté transversalement à l'axe de la colonne selon une disposition qui est parfaitement usuelle sur tous les véhicules, cet ensemble comportant en outre un dispositif de sécurité dit à « air bag », avec une cartouche pyrotechnique automatiquement déclenchée et mise à feu lors d'un choc brutal survenant sur le véhicule de manière à produire, de façon quasi instantanée, un volume approprié de gaz refoulé dans un sac souple, gonflable qui s'interpose entre le volant et la poitrine de l'utilisateur, en évitant que, en réaction au choc, celui-ci ne soit violemment heurté par ce volant ou une quelconque autre partie rigide de la colonne de direction.

Dans les solutions les plus couramment mises en oeuvre, ce dispositif de sécurité à air bag est logé dans le moyeu central de la colonne de direction et tourne en totalité avec celle-ci, ce qui exige notamment de donner au sac gonflable une forme symétrique autour de l'axe de cette colonne pour que l'effet produit au moment du déclenchement du dispositif soit sensiblement identique à lui-même, quelle que soit la position angulaire du volant au moment du choc.

Pour améliorer le fonctionnement de ce dispositif, en particulier pour qu'il puisse présenter une forme non symétrique autour de l'axe de la colonne, mieux adaptée à la morphologie du conducteur et par suite susceptible d'accroître sensiblement sa sécurité, on a déjà prévu de disposer ensemble la cartouche pyrotechnique et le sac gonflable dans le moyeu du volant qui est maintenu fixe et autour duquel tourne ce volant, une disposition de ce genre étant décrite et représentée dans le BF 2 702 724 notamment.

Cette solution, qui permet de réduire l'inertie du volant proprement dit et augmente donc le confort de la conduite, exige cependant que ce volant soit solidaire d'un fût tubulaire qui joue le rôle de la colonne de direction et qui tourne autour du moyeu fixe, ce qui est difficile à réaliser et augmente les frottements et par suite les risques de collage de la colonne, avec au total une fiabilité d'utilisation plus réduite.

On a également déjà envisagé de séparer dans le dispositif de sécurité la cartouche pyrotechnique du sac gonflable et de la monter dans un support fixe par rapport auquel tourne la colonne de direction, laquelle est solidaire du volant dans le moyeu duquel est disposé le sac gonflable, ce moyeu étant entraîné en rotation avec le volant ou même agencé pour rester fixe, le volant tournant alors autour de ce moyeu.

Une telle solution connue apporte, comme la précédente, l'avantage de réduire largement l'inertie du dispositif de sécurité, dans lequel la cartouche pyrotechnique représente une majeure partie de la masse. De plus, dans le cas où le sac gonflable séparé de la cartouche est logé dans un moyeu fixe sur lequel tourne le volant, il n'est plus nécessaire de prévoir une alimentation électrique des commandes ordinairement disposées sur ce volant lui-même, qui sont aisément reportées sur le moyeu, ce qui évite l'usage de contacts tournants ou de nappes de fils entre partie fixe et partie mobile, en facilitant en outre l'accès permanent à l'emplacement restant inchangé de ces commandes, indépendamment de la position angulaire du volant.

La présente invention a pour objet un ensemble de direction qui conserve les avantages de ces solutions quant à la réduction de l'inertie du volant dans un système à colonne axiale et à dispositif de sécurité à « air bag », où la cartouche pyrotechnique est fixe, indépendante de la colonne de direction et séparée du sac gonflable, celui-ci pouvant selon le cas être lui-même monté dans un moyeu solidarisé du volant ou fixe, le volant tournant dans ce cas autour de ce moyeu, mais y apporte un perfectionnement qui améliore encore l'efficacité de ce dispositif de sécurité.

En effet, dans les solutions connues, la séparation de la cartouche et du sac gonflable ne peut empêcher que le gaz fourni par cette cartouche ne parvienne pas en totalité dans le sac, une fraction au moins de ce gaz pouvant s'échapper vers l'extérieur, au droit des jeux de montage de la colonne de direction vis-à-vis du support fixe de la cartouche, également entre ce support et la partie mobile du volant, avec ou autour du moyeu qui est soit mobile avec ce dernier, soit fixe et sur lequel, dans ce cas, il effectue sa rotation pour entraîner la colonne.

L'invention concerne plus précisément les moyens mis en oeuvre pour assurer une étanchéité accrue entre partie fixe et partie mobile dans un ensemble de ce genre, améliorant en conséquence l'efficacité du dispositif de sécurité et en particulier le gonflage optimal du sac.

A cet effet, l'ensemble considéré, comportant une colonne de direction entraînée par un volant de manoeuvre mobile en rotation autour de l'axe de cette colonne et un dispositif de sécurité comprenant une cartouche pyrotechnique montée en position fixe extérieurement au volant, propre à délivrer à travers un diffuseur un volume de gaz apte à gonfler un sac souple logé dans un moyeu associé à ce volant, se caractérise en ce qu'il comporte, entre la cartouche et le moyeu, un organe d'étanchéité agencé pour se déformer sous l'effet de la pression du gaz émis par la cartouche lors de la mise en oeuvre du dispositif de sécurité pour obturer le jeu laissé libre entre cette cartouche et ce moyeu préalablement à cette mise en oeuvre, afin de permettre la rotation du volant et de la colonne.

Selon une caractéristique particulière, l'organe d'étanchéité est constitué par un élément tubulaire, entourant la cartouche et solidarisé de celle-ci, cet élément étant prolongé par une lèvre déformable propre à venir s'appliquer sur une collerette du moyeu.

Selon une variante, l'élément tubulaire de l'organe d'étanchéité comprend un épaulement plan, apte à s'appliquer par déformation contre le moyeu.

Dans un mode de réalisation particulier, le moyeu est mobile autour de la colonne de direction, le diffuseur de pression répartissant le gaz dans le sac gonflable étant disposé en regard de la cartouche fixe.

Selon une disposition perfectionnée de ce même mode de réalisation, la liaison entre la colonne de direction et le moyeu est réalisée par un ressort en spirale, limitant l'angle de rotation relative du moyeu par rapport au volant solidaire de la colonne.

Dans une variante, le moyeu est fixe, le volant comportant un fond monté entre la colonne de direction et ce moyeu, solidaire de l'organe d'étanchéité déformable.

Dans cette variante, le moyeu comporte un pignon satellite coopérant avec deux couronnes dentées, fixes et parallèles, respectivement portées par ce moyeu et la cartouche, afin de permettre la rotation du volant et de la colonne de direction.

Dans une autre variante, le moyeu comporte un roulement à billes ou similaire, monté entre ce moyeu et la cartouche.

D'autres caractéristiques d'un ensemble de direction à « air bag », établi conformément à l'invention, apparaîtront encore à travers la description qui suit de plusieurs exemples de réalisation, donnés à titre indicatif et non limitatif, en référence aux dessins annexés sur lesquels :
- La Figure 1 est une vue très schématique, en coupe axiale, d'un ensemble de direction selon l'invention, correspondant à un premier mode de réalisation où le sac gonflable du dispositif de sécurité tourne avec le volant.
- Les Figures 2 et 3 sont des vues de détail de la Figure 1, illustrant deux variantes de réalisation de l'organe d'étanchéité et de sa mise en oeuvre dans l'ensemble de direction.
- Les Figures 4 et 5 sont des vues en coupe, illustrant deux autres modes de réalisation de l'ensemble de direction dans lesquels le sac gonflable du dispositif de sécurité est fixe, le volant tournant autour de celui-ci.
- Les Figures 6 et 7 illustrent deux variantes du mode de réalisation illustré sur la Figure 5.

On a repris sur ces figures des chiffres de référence identiques pour désigner de l'une à l'autre les mêmes organes de l'ensemble de direction.

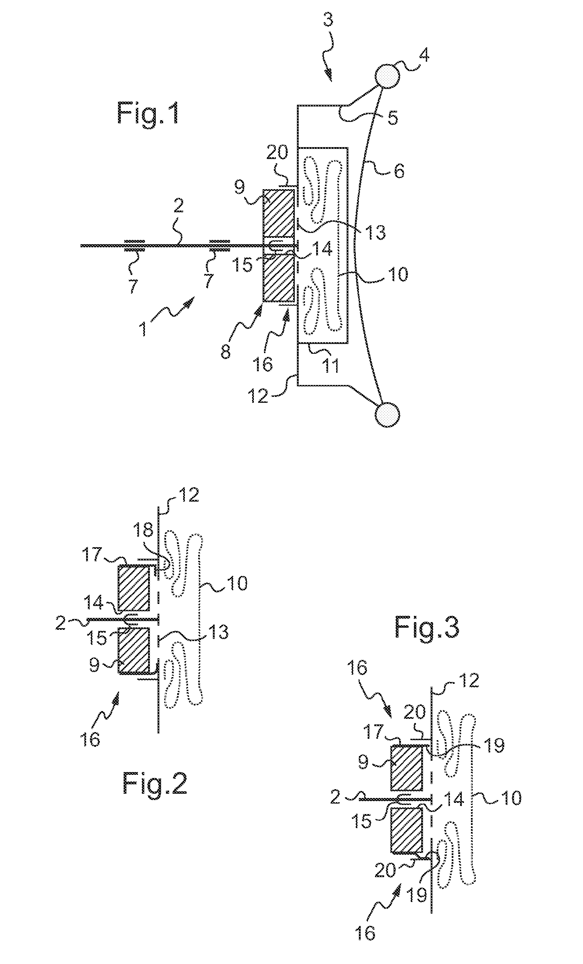

Sur la Figure 1, cet ensemble pour la commande des roues d'un véhicule automobile, ici très schématiquement représenté, comporte essentiellement une colonne de direction 2 susceptible d'être entraînée en rotation autour de son axe par un volant de manoeuvre 3, comprenant de façon usuelle un anneau de préhension et d'entraînement 4, solidaire d'un moyeu 5 très schématiquement illustré, sa structure particulière n'important pas par elle-même à l'invention, ce moyeu étant associé à une coiffe externe 6 qui est ainsi entraînée avec le volant.

La colonne de direction 2 tourne sur des paliers 7 disposés à l'intérieur d'un fût ou similaire (non représenté), permettant le montage de l'ensemble sur le châssis du véhicule d'une façon qui est en elle-même classique et qu'il n'est donc pas nécessaire de décrire ici.

La colonne de direction 2 est par ailleurs associée à un dispositif de sécurité 8 comportant, de manière également connue dans la technique, une cartouche pyrotechnique 9, munie d'un dispositif de mise à feu déclenché en cas de choc brutal sur le véhicule, cette cartouche délivrant quasi instantanément une quantité de gaz propre à se répartir à l'intérieur d'un sac souple et gonflable 10, logé dans un caisson 11 à l'intérieur du moyeu 5 du volant 3, de manière à ce que ce sac ainsi gonflé, écartant la coiffe 6, se dispose entre l'ensemble de direction et la poitrine du conducteur tenant le volant entre ses mains, en évitant qu'il ne heurte violemment cet ensemble et ne subisse des dommages corporels pouvant être particulièrement graves.

Le gaz produit par la mise à feu de la cartouche 9 est introduit dans le sac 10 de l'autre côté du fond 12 du moyeu 5 à travers un diffuseur de pression 13, constitué notamment d'une tôle perforée ou analogue.

Selon une disposition déjà mise en oeuvre dans certains véhicules automobiles, il est particulièrement avantageux de monter la cartouche pyrotechnique 9, qui représente à elle seule la majeure partie du poids du dispositif de sécurité 8, de telle sorte qu'elle soit solidaire d'une partie fixe de l'ensemble de direction, notamment du fût dans lequel tourne la colonne 2, ceci afin de limiter efficacement l'inertie du volant qui n'entraîne pas cette cartouche dans ses mouvements mais, à l'inverse, tourne par rapport à celle-ci avec la colonne.

Dans l'exemple de réalisation représenté sur la Figure, la colonne 2 est rendue solidaire du fond 12 du moyeu 5 après traversée d'un alésage 14 ménagé dans la cartouche 9, cet alésage permettant la libre rotation du volant et de la colonne sans entraîner la cartouche elle-même.

En revanche, dans ce mode de réalisation, le sac gonflable 10 tourne avec la colonne 2 et le volant 3.

On conçoit donc qu'il soit indispensable de prévoir, entre la cartouche pyrotechnique 9 en position fixe et le moyeu 5 du volant 3, également à la traversée de cette cartouche par la colonne 2 dans l'exemple considéré, des moyens d'étanchéité de telle sorte que le gaz délivré par la cartouche lors de sa mise à feu soit essentiellement envoyé à l'intérieur du sac 10 pour assurer le gonflage optimal de celui-ci, et qu'à l'inverse, ce gaz ne s'échappe pas vers l'extérieur, à travers les jeux nécessaires entre parties fixe et mobile de l'ensemble de direction 1.

A cet effet, dans le cas illustré où la cartouche pyrotechnique 9 fixe est traversée par la colonne 2, celle-ci est avantageusement munie, à l'intérieur de l'alésage 14 de la cartouche d'une bague souple 15 en forme de coupelle, dont le fond axial est solidaire de la colonne et dont le bord périphérique, libre, est prévu pour se déformer légèrement et venir s'appuyer de manière étanche contre la paroi de l'alésage sous l'effet du gaz délivré par la cartouche 9 dans le sac 10 à travers le diffuseur 13.

Par ailleurs et conformément à l'invention, la cartouche 9 est elle-même munie d'un organe d'étanchéité 16, dont les Figures 2 et 3 illustrent deux variantes de réalisation, en représentant schématiquement par convention cet organe avant et après la mise à feu de la cartouche, l'organe d'étanchéité étant inactif initialement puis actif ensuite, lorsque le sac 10 est gonflé par le gaz émis.

Dans l'exemple de la Figure 2, cet organe d'étanchéité 16 comporte un élément tubulaire 17, entourant la cartouche 9 et solidarisé de la paroi externe de celle-ci, cet élément tubulaire 17 étant prolongé par un épaulement plan 18 qui s'étend parallèlement au fond 12 du moyeu 5, notamment au droit du diffuseur 13 prévu dans celui-ci.

L'élément tubulaire 17 est réalisé en un matériau susceptible de se déformer sous l'effet de la pression du gaz délivré par la cartouche 9, de telle sorte que, dans cet exemple, son épaulement 18 s'applique étroitement contre le fond 12 en évitant que le gaz ne puisse s'échapper vers l'extérieur, entre le moyeu 5 et cette cartouche.

Avantageusement, l'élément tubulaire 17 est réalisé en un métal relativement rigide, mais néanmoins propre à subir une déformation suffisante, de l'ordre en pratique d'une fraction de millimètre, propre à assurer l'étanchéité satisfaisante requise lors de la mise à feu de la cartouche 9.

A titre d'illustration et par simple convention, on a représenté l'organe d'étanchéité 16 formé par l'élément tubulaire 17 de la Figure 2, en deux positions, selon que son épaulement 18 est dégagé du fond 12 du moyeu 5 en fonctionnement normal de l'ensemble de direction, ou bien est appliqué étroitement contre celui-ci suite à la mise à feu de la cartouche 9, en réalisant l'étanchéité nécessaire.

Dans la variante de réalisation illustrée sur la Figure 3, l'élément tubulaire 17 présente un profil différent du précédent et se prolonge, au-delà de la cartouche 9, par une lèvre 19 qui se déforme, comme dans l'exemple précédent, lors de la mise à feu de cette cartouche, cette lèvre 19 venant s'appliquer étroitement dans ce cas contre une collerette d'appui 20 portée par le fond 12 du moyeu 5.

Comme dans la première variante, la Figure 3 illustre par convention, les positions de la lèvre 19 de l'élément tubulaire, avant et après mise en oeuvre de la cartouche.

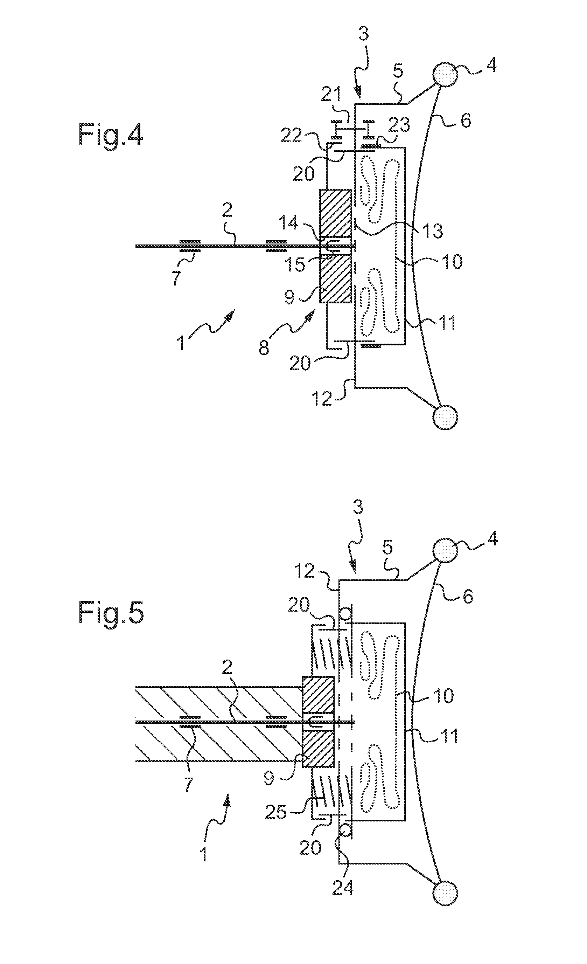

Les Figures 4 et 5 illustrent d'autres modes de réalisation du dispositif de sécurité 8 dans lequel, non seulement la cartouche pyrotechnique 9 est fixe comme dans l'exemple précédent, mais également le caisson 11 qui contient le sac gonflable 10, le volant 3 étant aménagé pour tourner avec la colonne de direction 2, autour de ce dispositif.

Dans l'exemple de la Figure 4, le fond 12 du moyeu 5, comportant le diffuseur 13 en regard de la cartouche 9 et la collerette d'étanchéité 20, supporte un pignon satellite 21 qui coopère avec deux couronnes dentées, parallèles, respectivement 22 et 23, la première étant solidaire de la cartouche fixe 9 et la seconde du caisson 11 contenant le sac 10, également en position fixe par rapport au volant 3.

Dans cet exemple, l'organe d'étanchéité est directement réalisé par la collerette 20 qui, sous l'effet de la pression du gaz, lors de la mise à feu de la cartouche 9, s'applique directement contre le côté du caisson 11 contenant le sac gonflable 10 d'une part et contre le support fixe de cette cartouche qui porte la couronne dentée 22 d'autre part.

Dans la variante représentée sur la Figure 5, le fond 12 du moyeu 5 tourne vis-à-vis de la cartouche 9 et du caisson 11 qui contient le sac gonflable 10, autour d'un roulement 24 à billes ou similaire. En outre, dans cet exemple, la cartouche est reliée au caisson 11 par un ressort à spirale 25, à larges spires et faible raideur, destiné à limiter le mouvement de rotation relatif du caisson contenant le sac gonflable vis-à-vis de la cartouche. Dans cet exemple, l'étanchéité est à nouveau réalisée par la déformation de la collerette 20 vers le caisson 11 mobile, qui contient le sac gonflable 10, et vers la paroi en regard du support fixe de la cartouche 9.

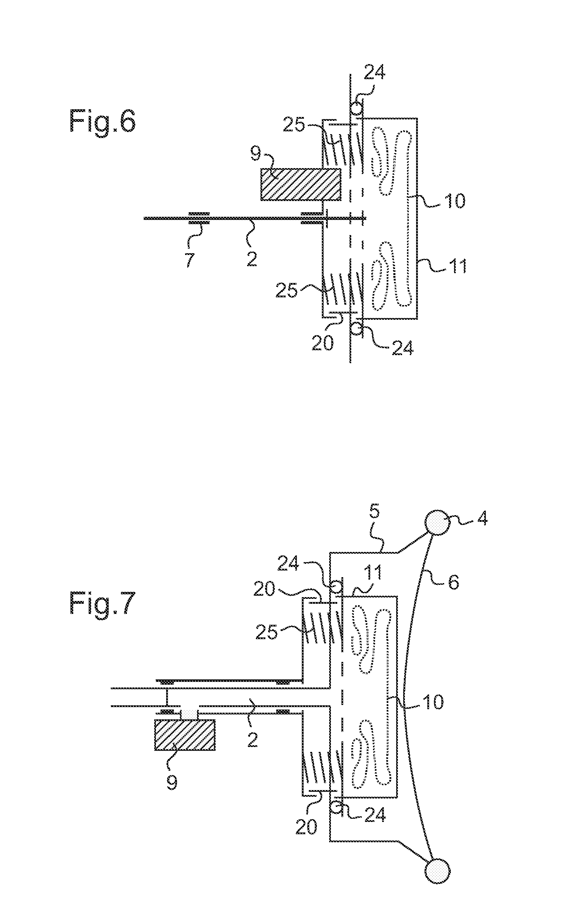

Les Figures 6 et 7 illustrent deux autres variantes reprenant l'ensemble des dispositions de la Figure 5, mais dans lesquelles la cartouche pyrotechnique 9 n'est plus traversée par la colonne 2 mais s'étend en position fixe, parallèlement à celle-ci.

On réalise ainsi un ensemble de direction comportant un dispositif de sécurité à « air bag » dans lequel la cartouche pyrotechnique est toujours montée en position fixe vis-à-vis de la colonne de direction, le sac gonflable associé à cette cartouche et recevant le gaz produit par celle-ci pouvant être lui-même mobile avec le volant et la colonne, ou également immobilisé par rapport à la cartouche, totalement ou seulement avec une possibilité de rotation relative, limitée grâce à un ressort à spirale approprié.

Un tel ensemble de direction présente l'avantage de réduire largement l'inertie du volant en augmentant l'agrément et la sécurité de la conduite. Lorsque le sac gonflable est lui-même en position fixe par rapport au volant qui tourne autour de lui, il est possible d'adapter la forme du sac pour accroître l'efficacité de son effet sur la poitrine du conducteur. De plus, cette solution évite le montage de nappes tournantes de fils ou autres liaisons électriques avec les commandes portées par le volant qui peuvent être disposées sur la partie fixe de l'ensemble de direction.

Bien entendu, il va de soi que l'invention ne se limite pas aux exemples de réalisation plus spécialement décrits et représentés ci-dessus ; elle en embrasse au contraire toutes les variantes.

## Revendications

1. - Ensemble de direction à « air bag », pour véhicule automobile, comportant une colonne de direction (2) entraînée par un volant de manoeuvre (3) mobile en rotation autour de l'axe de cette colonne et un dispositif de sécurité (8) comprenant une cartouche pyrotechnique (9) montée en position fixe extérieurement au volant, propre à délivrer un volume de gaz apte à gonfler un sac souple (10) logé dans un moyeu (5) associé à ce volant, **caractérisé en ce qu'**il comporte, entre la cartouche (9) et le moyeu (5), un organe d'étanchéité (16) agencé pour se déformer sous l'effet de la pression du gaz émis par la cartouche (9) lors de la mise en oeuvre du dispositif de sécurité (8) pour obturer le jeu laissé libre entre cette cartouche et ce moyeu préalablement à cette mise en oeuvre, afin de permettre la rotation du volant et de la colonne.

2. - Ensemble de direction selon la revendication 1, **caractérisé en ce que** l'organe d'étanchéité (16) est constitué par un élément tubulaire (17), entourant la cartouche (9) et solidarisé de celle-ci, cet élément étant prolongé par une lèvre déformable (19) propre à venir s'appliquer sur une collerette d'appui (20) du moyeu (5).

3. - Ensemble de direction selon la revendication 2, **caractérisé en ce que** l'élément tubulaire (17) de l'organe d'étanchéité (16) comprend un épaulement plan (18), apte à s'appliquer par déformation contre le moyeu (5).

4. - Ensemble de direction selon l'une quelconque des revendications 1 à 3, **caractérisé en ce que** le moyeu (5) est mobile autour de la colonne de direction (2), le diffuseur de pression (13) répartissant le gaz dans le sac gonflable (10) étant disposé en regard de la cartouche (9).

5. - Ensemble de direction selon la revendication 4, **caractérisé en ce que** la liaison entre la colonne de direction (2) et le moyeu (5) est réalisée par un ressort en spirale (25), limitant l'angle de rotation relative du moyeu par rapport au volant (3) solidaire de la colonne.

6. - Ensemble de direction selon l'une quelconque des revendications 1 à 3, **caractérisé en ce que** le moyeu (5) est fixe, le volant (3) comportant un fond (12) monté entre la colonne de direction (2) et ce moyeu, solidaire de l'organe d'étanchéité déformable (16).

7. - Ensemble de direction selon la revendication 6, **caractérisé en ce que** le moyeu (5) comporte un pignon satellite (21) coopérant avec deux couronnes dentées (22,23), fixes et parallèles, respectivement portées par le moyeu (5) et la cartouche (9), afin de permettre la rotation du volant (3) et de la colonne de direction (2).

8. - Ensemble de direction selon la revendication 6, **caractérisé en ce que** le moyeu (5) comporte un roulement à billes (24) ou similaire, monté entre ce moyeu et la cartouche (9).

9. - Ensemble de direction selon l'une quelconque des revendications 1 à 8, **caractérisé en ce que** la cartouche pyrotechnique (9) fixe, s'étend transversalement et comporte un alésage (14) traversé par la colonne de direction (2), dans lequel est monté un organe d'étanchéité complémentaire constitué par une bague souple (15) en forme de coupelle, dont le fond axial est solidaire de la colonne et dont le bord périphérique, libre, est prévu pour se déformer légèrement et venir s'appuyer de manière étanche contre la paroi de l'alésage sous l'effet du gaz délivré par la cartouche (9) dans le sac gonflable (10).

10. - Ensemble de direction selon l'une quelconque des revendications 1 à 8, **caractérisé en ce que** la cartouche pyrotechnique (9) fixe, s'étend parallèlement à la colonne de direction (2).
